# EUROPÄISCHE PATENTSCHRIFT

(11) **EP 3 428 583 B1**
(45) Veröffentlichungstag und Bekanntmachung des Hinweises auf die Patenterteilung: **12.08.2020**
(21) Anmeldenummer: 18000546.4
(22) Anmeldetag: 20.06.2018
(51) Int. Cl.: G01F 1/66, G01F 25/00, G01F 15/00, G01F 1/00

(54) **VERFAHREN ZUM BETRIEB EINES FLUIDZÄHLERS UND FLUIDZÄHLER**
METHOD FOR OPERATING A FLUID FLOW COUNTER AND FLUID FLOW COUNTER
PROCÉDÉ DE FONCTIONNEMENT D'UN COMPTEUR DE FLUIDE ET COMPTEUR DE FLUIDE

(30) Priorität: 08.07.2017 DE 102017006494
(43) Veröffentlichungstag der Anmeldung: 16.01.2019
(73) Patentinhaber: Diehl Metering GmbH, 91522 Ansbach (DE); Diehl Metering S.A.S., 68304 Saint Louis (FR)
(72) Erfinder: Gloss, Maximilian, DE - 32139 Spenge (DE); Hirner, Felix, DE - 73529 Schwäbisch Gmünd (DE); Nguyen, Cong Minh, DE - 76139 Karlsruhe (DE); VOß, Katharina, DE - 76137 Karlsruhe (DE); Winter, Maximilian, DE - 69115 Heidelberg (DE); Valentin, Zimmermann, DE - 76646 Bruchsal (DE)
(74) Vertreter: Diehl Patentabteilung

(56) Entgegenhaltungen:
- DE-A1-102007 019 689
- JP-A- 2014 182 024
- US-A1- 2011 098 938
- US-A1- 2017 153 136

## Beschreibung

Die vorliegende Erfindung betrifft ein Verfahren zum Betrieb eines Fluidzählers, insbesondere eines Clamp-on-Fluidzählers, gemäß dem Oberbegriff des Anspruchs 1 sowie einen Fluidzähler.

### Technologischer Hintergrund

Fluidzähler werden vorzugsweise als Wasserzähler zur Bestimmung der Durchflussmenge von Wasser bzw. des Trinkwasserverbrauchs in Haushalten oder Unternehmen oder als Wärmemengenzähler zur Ermittlung der verbrauchten Wärmeenergie eingesetzt.

Die Durchflussmengenbestimmung kann beispielsweise mechanisch (z. B. Flügelradwasserzähler), magnetisch-induktiv oder mittels einer Ultraschallmessanordnung (z. B. Ultraschallfluidzähler) erfolgen. Die Funktionsweise eines Ultraschallfluidzählers basiert auf dem Einsatz von Ultraschallwandlern, insbesondere von piezoelektrischen Ultraschallwandlern. Hierbei bilden z. B. zwei Ultraschallwandler ein Ultraschallwandlerpaar, mit einer zwischen den Ultraschallwandlern befindlichen Messstrecke. Entlang der Messstrecke können Ultraschallwellen bzw. Ultraschallsignale, insbesondere in Form sogenannter Ultraschallbursts, von den Ultraschallwandlern gesendet und empfangen werden. Die Messstrecke kann hierbei unterschiedlichste Formen aufweisen. Sie kann zum Beispiel geradlinig oder aufgrund von Umlenkungen an Reflektoren oder Spiegeln U-förmig, zick-zack-förmig oder gekrümmt ausgebildet sein.

Fluidzähler besitzen üblicherweise ein Anschlussgehäuse mit einem Einlass und einem Auslass, mittels dem der Fluidzähler in die Rohrleitung eines Fluidleitungsnetzes, wie z. B. eine Trinkwasserrohrleitung, installiert werden kann. Hierzu muss die Rohrleitung geöffnet werden, sodass der Ultraschallfluidzähler in diese eingesetzt werden kann. Dementsprechend hoch sind der Installationsaufwand und die Installationsdauer.

Demgegenüber sind auch Ultraschallfluidzähler bekannt, die außen an die Rohrleitung angebracht werden können, sogenannte Clamp-on-Fluidzähler. Derartige Clamp-on-Fluidzähler können die Rohrleitung durchschallen und auf diese Weise die Durchflussmenge des darin strömenden Fluids bestimmen. Jedoch besitzt diese Art von Fluidzähler den Nachteil, dass eine Kalibration des Clamp-on-Fluidzählers im Gelände vorgenommen werden muss, um sicherzustellen, dass der Fluidzähler messtechnisch an die jeweilige Einbausituation vor Ort angepasst ist. Hierzu muss der fluiddurchströmte Querschnitt der Rohrleitung in der Regel von Hand gemessen werden. Diese Methode ist ungenau und fehleranfällig. Daher ergeben sich Probleme hinsichtlich einer Eichung des Fluidzählers, sodass derartige Fluidzähler nicht auf beliebigen, bereits installierten Rohrleitungen eichfähig sind. Hierzu müssten die jeweiligen Rohrleitungen durch mitgeeichte Rohrleitungen getauscht werden. Ferner können betriebsbedingte Änderungen, wie z. B. Ablagerungen an der Rohrleitung zu einer Veränderung des Strömungsquerschnitts führen und dadurch die Messgenauigkeit des Fluidzählers über die Betriebszeit verschlechtern (Messdrift).

### Druckschriftlicher Stand der Technik

Ein Verfahren gemäß dem Oberbegriff des Anspruchs 1 ist aus der US 2011/0098938 A1 bekannt. Bei diesem Verfahren wird mit einer ersten zwei Clamp-on-Ultraschallwandler umfassenden Messanordnung die Ultraschalllaufzeit eines gasförmigen Mediums in einer Rohrleitung gemessen. Ferner wird mit einem Ultraschalldopplerimpuls die Fließgeschwindigkeit einer zusätzlichen Flüssigschicht in der Rohrleitung gemessen. Die Dicke der Rohrwandung der Rohrleitung wird mit einem Ultraschallwanddickenmessgerät erfasst oder aus den Aufzeichnungen der Ultraschalldopplermessung abgeschätzt. Aus der gemessenen Dicke sowie dem Außendurchmesser der Rohrwandung wird die innere Querschnittsfläche der Rohrleitung berechnet. Diese wird wiederum zur Bestimmung des Flüssig- und/oder Gasvolumens verwendet, welches durch die Rohrleitung pro Zeiteinheit hindurchtritt.

Aus der DE 10 2007 019 689 A1 ist eine Vorrichtung zur Bestimmung des Volumens und/oder Massendurchflusses eines Mediums durch eine Rohrleitung bekannt. Die Vorrichtung umfasst jeweils zwei Paare von piezoelektrische Elementen, die gemeinsam auf einer Grundplatte positioniert sind, welche an der Außenseite einer Rohrleitung mittels einer geeigneten Befestigungsvorrichtung angebracht wird. Das eine Paar der piezoelektrischen Elemente ist für die Messung des Volumens bzw. Massedurchsatzes des Mediums anhand einer Laufzeitdifferenzmessung vorgesehen. Ein weiteres Paar von piezoelektrischen Elementen stellt Diagnosedaten in Form von Informationen über die Dicke der Wandung der Rohrleitung, über eventuelle Ablagerungen oder korrosive Veränderungen an der Wandung der Rohrleitung zur Verfügung. Erfasst werden Reflexionsstellen am Außen- und Innendurchmesser der Rohrleitung. Die Diagnosedaten des weiteren Paares von piezoelektrischen Elementen werden unter anderem auch für die Ermittlung der Temperatur des Mediums verwendet.

Die US 2017/0153136 A1 betrifft einen Clamp-on-Ultraschall-Durchflusssensor mit einer automatischen Rohrleitungsdicken-Messfunktion. Das Verfahren basiert auf der Messung der Resonanzfrequenz über eine schräg von der einen Seite der Rohrleitung zur anderen Seite der Rohrleitung verlaufende Messstrecke.

Aus der JP 2014-182024 A ist eine Ultraschallmesseinrichtung bekannt, mit der Ablagerungen an der Innenseite einer Rohrleitung festgestellt werden können. Die Erfassung von Ablagerungen an der Innenseite der Rohrleitung erfolgt durch Bestimmung der Verteilung des Durchflusses in Abhängigkeit des Rohrquerschnitts auf Basis von Ultraschallmessungen schräg zur Mittellinie der Rohrleitung.

Aus der EP 0 686 255 B1 ist bereits ein Clamp-on-Ultraschalldurchflussmesser für die Installation an einer Rohrleitung bekannt, welcher den Volumendurchfluss anhand eines ersten und eines zweiten Paares Ultraschallwandler bestimmt. Ferner besitzt dieser Ultraschalldurchflussmesser einen zusätzlichen Ultraschallwandler, der dazu dient, die Orthogonal-Laufzeit des Ultraschallsignals innerhalb der Wandung der Rohrleitung sowie die Orthogonal-Laufzeit des Ultraschallsignals, welches sich vom Ultraschallwandler durch das Fluid ausbreitet und an der dem Ultraschallwandler gegenüberliegenden Innenwand der Rohrleitung reflektiert wird, zu bestimmen. Zudem wird anhand des gemessenen Rohrumfangs ein Umfangssignal und anhand der für das Material der Rohrleitung bekannten Schallgeschwindigkeit ein Schallgeschwindigkeitssignal festgelegt. Aus den beiden Orthogonal-Laufzeiten, dem Umfangssignal und dem Schallgeschwindigkeitssignal wird anschließend die Wandstärke der Rohrleitung sowie die Schallgeschwindigkeit im Fluid bestimmt, woraus sich der Innendurchmesser der Rohrleitung ableiten lässt. Der Fluidzähler besitzt den Nachteil, dass Verschmutzungen und Ablagerungen an der Rohrwandung der Rohrleitung den Strömungsquerschnitt mit der Zeit verkleinern und somit die Messgenauigkeit verringern. Mit zunehmender Verschmutzung der Rohrleitung entsteht dadurch eine Drift der Messgenauigkeit was sich auf die Haltbarkeit bzw. Langzeit- oder Messstabilität auswirkt. Ferner wird die Schallgeschwindigkeit im Fluid als Parameter zur Bestimmung des Innendurchmessers verwendet. Die Schallgeschwindigkeit im Fluid unterliegt jedoch starken Schwankungen, die das Messergebnis nachteilig beeinflussen können.

### Aufgabe der vorliegenden Erfindung

Die Aufgabe der vorliegenden Erfindung besteht darin, ein Verfahren zum Betrieb eines gattungsgemäßen Fluidzählers zur Verfügung zu stellen, bei dem die Messgenauigkeit und Messstabilität verbessert werden.

### Lösung der Aufgabe

Die vorstehende Aufgabe wird durch die gesamte Lehre des Anspruchs 1 sowie durch die nebengeordneten Ansprüche gelöst. Zweckmäßige Ausgestaltungen der Erfindung sind in den Unteransprüchen beansprucht.

Erfindungsgemäß werden betriebsbedingte Änderungen des Strömungsquerschnitts, z. B. durch Verschmutzungen bzw. Ablagerungen im Bereich der Rohrwandung, anhand der Laufzeit des Ultraschallsignals entlang der zweiten Messstrecke ermittelt. Anschließend erfolgt eine Korrektur der ersten Messanordnung anhand der ermittelten betriebsbedingten Änderungen des Strömungsquerschnitts. Die Rohrleitung wird hierbei mittels Ultraschall bzw. mittels Impuls-EchoVerfahren vermessen. Dadurch wird eine vorzugsweise integrierte und fortlaufende Bestimmung des Strömungsquerschnitts ermöglicht, bei der neben der anfänglichen Ermittlung des Rohrinnendurchmessers bzw. des Strömungsquerschnitts auch eine betriebsbedingte Veränderung des Strömungsquerschnitts erfasst wird, d. h. es kann eine fortlaufende nicht-invasive Bestimmung des Rohrinnendurchmessers sowie eine Ablagerungserfassung (Verschmutzungsbestimmung oder Condition-Monitoring) parallel durchgeführt werden. Die dadurch erfassten Werte können zur Installation, Wartung und/oder Kalibration des Fluidzählers herangezogen werden, wodurch sich die Messgenauigkeit und Messstabilität des Fluidzählers erheblich verbessern lässt. Beispielsweise können dadurch die Einstellungen zur Steuerung der ersten Messanordnung, wie z. B. die Frequenz und/oder Intensität des Ultraschallsignals der ersten Messanordnung, an die jeweilige Messsituation, d. h. dem aktuell vorliegenden bzw. betriebsbedingt veränderten Strömungsquerschnitt, angepasst werden.

Erfindungsgemäß wird der aktuelle bzw. der betriebsbedingt geänderte Strömungsquerschnitt der Rohrleitung anhand der Schallgeschwindigkeit im Fluid und der Laufzeit des Ultraschallsignals entlang der zweiten Messstrecke bestimmt.

Gemäß der Erfindung sendet der Ultraschallwandler der zweiten Messanordnung das Ultraschallsignal bzw. Sendesignal orthogonal zur Durchströmungsrichtung des Fluids entlang der zweiten Messstrecke. Zur Ermittlung der betriebsbedingten Änderungen des Strömungsquerschnitts kann ein Empfangssignal verwendet werden, welches sich zusammensetzt aus Reflexionsanteilen des Sendesignals in Bezug auf eine Reflexion des Sendesignals an verschiedenen Grenzschichten (Grenzflächenreflexionen), wie z. B. der Grenzschicht zwischen innerer Rohrwandung und Ablagerung und/oder der Grenzschicht zwischen Ablagerung und Fluidschicht und/oder der Grenzschicht zwischen Fluidschicht und gegenüberliegender Ablagerung und/oder der Grenzschicht zwischen gegenüberliegender Ablagerung und gegenüberliegender innerer Rohrwandung und/oder der äußeren Rohrwandung. Durch die Detektion der reflektierten Signale bzw. Signalanteile und/oder deren Laufzeit kann die genaue Lage bzw. Position der Grenzschichten bestimmt werden, wodurch sich z. B. auch die Schichtdicke der Ablagerungen und damit z. B. der Grad der Verschmutzung bestimmen lässt. Wartungsintervalle können dadurch individuell an die jeweilige Einbausituation angepasst werden. Die Haltbarkeit und Messstabilität des Fluidzählers wird dadurch in besonderem Maße verbessert. Ferner kann das Sendesignal auch an Materialgrenzen innerhalb einer Schicht reflektiert werden. Zudem kann neben der Änderung des Strömungsquerschnitts durch die Bestimmung der Position der Grenzschichten auch eine nur einseitig auftretende Ablagerung innerhalb der Rohrleitung erfasst werden.

Ferner können die betriebsbedingten Änderungen des Strömungsquerschnitts in Abhängigkeit von der Zeit erfasst und gespeichert werden. Daraus resultiert der Vorteil, dass ein Verlauf aufgezeichnet werden kann, anhand dessen Ereignisse ermittelt werden können, die eine Verschmutzung hervorgerufen haben. Darüber hinaus können Wartungs- und Reinigungsintervalle angepasst werden. Die Haltbarkeit und Messstabilität des Fluidzählers wird dadurch in besonderem Maße verbessert.

Erfindungsgemäß erfolgt eine Bestimmung der Temperatur des Fluids bzw. der Fluidtemperatur, wobei die Fluidtemperatur zur Korrektur der Schallgeschwindigkeit im Fluid und/oder der Durchflussmenge des Fluids, herangezogen wird. Dadurch, dass die Fluidtemperatur einen großen Einfluss auf die Messgenauigkeit hat, wird durch eine Temperaturkorrektur der Messwerte erreicht, dass die Messgenauigkeit und auch die Messstabilität noch zusätzlich verbessert werden.

Die Bestimmung der Temperatur des Fluids erfolgt anhand der ersten Messanordnung. Dazu kann z. B. wenn kein Fluiddurchfluss vorhanden ist (z. B. während des Einbaus), ein Ultraschallsignal bzw. ein Impuls entlang der ersten Messstrecke ausgesendet und anschließend die Laufzeit dieses Ultraschallsignals ermittelt werden. Während des Einbaus des Fluidzählers sind sowohl die Strecke, die das Ultraschallsignal zurücklegen muss, sowie die entsprechende Laufzeit, die es für das Zurücklegen dieser Strecke benötigt, bekannt, sodass anhand dieser Werte die Bestimmung der Temperatur des Fluids erfolgen kann.

Vorzugsweise wird die Temperatur des Fluids hierbei dadurch bestimmt, dass die gemessene Laufzeit mit der Laufzeit einer empirisch ermittelten Tabelle (Look-up-Tabelle) verglichen wird, welche die Laufzeit in Abhängigkeit der Temperatur des Fluids beinhaltet. Die entsprechende Temperatur kann somit anhand der gemessenen und den hinterlegten Laufzeiten, bzw. des hergeleiteten Laufzeitunterschiedes zwischen gemessener und empirisch ermittelter Laufzeit, z. B. durch Auslesen der Look-up-Tabelle, bestimmt werden.

Zusätzlich können zur Bestimmung der Temperatur des Fluids die Temperatur der Rohrleitung sowie die Umgebungstemperatur bestimmt werden. Anschließend kann die Fluidtemperatur anhand eines thermodynamischen Modells des Systems bestimmt bzw. berechnet werden.

Dabei kann die Bestimmung Rohrleitungstemperatur und/oder der Umgebungstemperatur mit zwei Temperatursensoren erfolgen, wobei die Rohrleitungstemperatur mit einem ersten Temperatursensor und die Umgebungstemperatur mit einem zweiten Temperatursensor erfasst werden, die z. B. im Bereich des Fluidzählers und/oder der Rohrleitung angeordnet sind.

Vorzugsweise ist als erste Messanordnung eine Ultraschallmessanordnung mit mindestens einem Ultraschallwandler zum Senden und/oder Empfangen von Ultraschallsignalen entlang der ersten Messstrecke vorgesehen. Die Durchflussmengenbestimmung des Fluids wird hierbei in bevorzugter Weise anhand einer Laufzeitmessung der Ultraschallsignale der Ultraschallmessanordnung durchgeführt (z. B. Laufzeitdifferenzmethode, Driftverfahren und/oder Dopplerverfahren).

Zweckmäßigerweise kann eine, vorzugsweise vom Fluidzähler selbsttätig vorzunehmende, Kalibrierfunktion zur Kalibration der ersten Messanordnung vorgesehen sein. Insbesondere kann die Kalibration der ersten Messanordnung anhand der ermittelten Werte der zweiten Messanordnung erfolgen, sodass sich der Fluidzähler selbsttätig bzw. automatisch kalibrieren kann (Selbstkalibrierfunktion). Dies befähigt den Fluidzähler, selbsttätig einer Messdrift, z. B. bedingt durch Ablagerungen im Rohr oder dessen Abtrag, entgegen zu wirken. Die Kalibration kann hierbei in bestimmten Zeitabständen selbsttätig vom Fluidzähler bzw. dessen Steuer- und Auswerteeinheit initialisiert und/oder durchgeführt werden. Dadurch können z. B. die durch Ablagerungen und/oder Temperaturveränderungen bewirkten Messabweichungen verringert werden. Die Messgenauigkeit und Messstabilität werden dadurch in besonderem Maße verbessert. Ferner ist es denkbar, dass durch eine von außen einwirkende, z. B. von der Schaltzentrale des Versorgers aus, ferngesteuerte Initialisierung der Kalibrierfunktion vorgesehen ist.

Ferner kann eine Verschmutzungsgradbestimmung vorgesehen sein, wobei der Grad der Verschmutzung anhand des betriebsbedingt geänderten Strömungsquerschnitts der Rohrleitung und/oder der Position der Grenzschichten bestimmt wird. Die Verschmutzungsgradbestimmung dient z. B. dazu, den Benutzer den aktuellen Verschmutzungsgrad anzuzeigen, z. B. über eine Anzeige am oder entfernt vom Fluidzähler oder eine nachgeschaltete Überwachungssoftware, die mit den verschmutzungsbezogenen Daten des Fluidzählers z. B. über Funk gespeist wird. Daraus resultiert der Vorteil, dass der aktuelle Verschmutzungsgrad des Fluidzählers stets abrufbar ist und somit rechtzeitig Schritte zur Beseitigung, wie z. B. Reinigung oder Austausch des Fluidzählers, eingeleitet werden können. Zudem kann die Verschmutzungsgradbestimmung eine Alarmfunktion umfassen.

Zweckmäßigerweise kann die Frequenz des an der inneren und/oder äußeren Rohrwandung reflektierten Ultraschallsignals bzw. der reflektierten Signalanteile des Ultraschallsignals der zweiten Messanordnung bestimmt werden. Anhand dieser Frequenz kann wiederum die Laufzeit des Ultraschallsignals in der Wandung der Rohrleitung bestimmt werden, womit sich z. B. die Wandstärke der Rohrleitung ermitteln lässt. Beispielsweise dadurch, dass die bekannten Größen Außenumfang der Rohrleitung und Schallgeschwindigkeit im Material der Rohrleitung sowie die bestimmte Laufzeit des Ultraschallsignals zur Berechnung der Wandstärke herangezogen werden. Die Wandstärke kann anschließend als zusätzlicher Parameter zur Strömungsquerschnitts- und/oder Durchflussmengenbestimmung herangezogen werden. Die Messgenauigkeit wird dadurch noch zusätzlich verbessert.

Ferner kann das Verfahren mindestens einen der Verfahrensschritte Erzeugung eines Reflexionssignals, Ermittlung eines Rückwandechos, Ermittlung des Beginns des Rückwandechos, Ermittlung der im Rückwandecho enthaltenen Frequenzen und/oder Berechnung der Laufzeit aus den ermittelten Frequenzen umfassen.

Zweckmäßigerweise kann eine dritte Messanordnung mit mindestens einem Ultraschallwandler vorgesehen sein. Der Ultraschallwandler kann in gleicher Weise ein Ultraschallsignal entlang einer dritten Messstrecke senden. Die dritte Messstrecke kann sich hierbei z. B. zwischen dem Ultraschallwandler und der inneren Rohrwandung befinden und schräg oder orthogonal zur zweiten Messtrecke verlaufen. Beispielsweise kann dies dadurch erfolgen, dass der Ultraschallwandler der dritten Messanordnung entlang des Umfangs der Rohrleitung um einen Winkel, z. B. von 90°, versetzt zum Ultraschallwandler der zweiten Messanordnung angeordnet wird. Anhand der Laufzeit des Ultraschallsignals entlang der dritten Messstrecke können somit betriebsbedingte Änderungen des Strömungsquerschnitts in einer zusätzlichen Messrichtung, z. B. orthogonal zur Messrichtung der zweiten Messanordnung verlaufend, ermittelt werden.

Vorzugsweise kann anhand der Messwerte der dritten Messanordnung eine Überprüfung und/oder Änderung der Messwerte der zweiten Messanordnung erfolgen, z. B. durch Mittelwertbildung. Daraus resultiert der Vorteil, dass eine Plausibilitätsprüfung der Messwerte der zweiten Messanordnung durchgeführt werden kann. Ferner kann ermittelt werden, ob die Verschmutzungen entlang der Rohrwandung radialsymmetrisch ausgebildet oder ungleichmäßig verteilt angeordnet sind. Diese Messwerte können in vorteilhafter Weise zur Korrektur der Messwerte der ersten und/oder zweiten Messanordnung herangezogen werden.

Nebengeordnet beansprucht die vorliegende Erfindung einen Fluidzähler, insbesondere einen Clamp-on-Fluidzähler zur Bestimmung der Durchflussmenge innerhalb einer Rohrleitung, der eine erste Messanordnung mit einer ersten Messstrecke zur Durchflussmengenbestimmung sowie eine zweite Messanordnung mit mindestens einem Ultraschallwandler umfasst. Der Ultraschallwandler ist dazu vorgesehen, ein Ultraschallsignal entlang einer zweiten Messstrecke zu senden und/oder zu empfangen. Die zweite Messstrecke befindet sich hierbei vorzugsweise zwischen dem Ultraschallwandler und der Rohrwandung oder zwischen dem Ultraschallwandler und einem weiteren Ultraschallwandler der zweiten Messanordnung. Ferner ist eine Steuer- und Auswerte-Einheit vorgesehen, mittels der die Laufzeit des Ultraschallsignals entlang der ersten und/oder der zweiten Messstrecke bestimmbar ist. Der Ultraschallwandler der zweiten Messanordnung ist dazu hergerichtet, ein Ultraschallsignal zu empfangen, das an einer Grenzschicht innerhalb der Rohrleitung reflektiert wird, wobei die Laufzeit des Ultraschallsignals zwischen dem Ultraschallwandler und der Grenzschicht durch die Steuer- und Auswerte-Einheit bestimmt und anschließend zur Positionsbestimmung der Grenzschicht herangezogen wird. Vorzugsweise ist als erste Messanordnung eine Ultraschallmessanordnung mit mindestens einem Ultraschallwandler zum Senden und/oder Empfangen von Ultraschallsignalen entlang der ersten Messstrecke vorgesehen. Die Durchflussmengenbestimmung des Fluids wird z. B. anhand einer Laufzeitmessung der Ultraschallsignale der Ultraschallmessanordnung durchgeführt, z. B. anhand einer Laufzeitdifferenzmethode.

Ferner können zur Bestimmung bzw. Messung der Temperatur der Rohrleitung sowie der Umgebungstemperatur Temperatursensoren vorgesehen sein, die bevorzugt im Bereich des Fluidzählers bzw. der Rohrleitung angeordnet bzw. montiert sind.

Vorzugsweise ist ein Montageadapter vorgesehen, der die Bauteilkomponenten des Fluidzählers, insbesondere die erste Messanordnung, die zweite Messanordnung und/oder die Steuer- und Auswerte-Einheit aufnimmt. Der Fluidzähler kann in einfacher Weise mittels des Montageadapters an die Rohrleitung angebracht werden. Hierbei sorgt der Montageadapter für Führung und Schutz aller auf die Rohrleitung aufgesetzten Baugruppen, z. B. Ultraschallwandler, Sensoren oder dergleichen, sowie deren korrekte Montage.

Der Montageadapter ist für einen Fluidzähler, insbesondere für einen Clamp-on-Fluidzähler, der ein Adapterteil umfasst, das eine Rohrhalbschalengeometrie aufweist, welche vorzugsweise an die Kontur der Rohrleitung angepasst ist. Ferner sind mindestens ein am Adapterteil angebrachtes Befestigungsmittel zum Befestigen des Adapterteils an der Rohrleitung sowie mindestens eine Aufnahme zum Aufnehmen der ersten und/oder zweiten Messanordnung und/oder der Steuer- und Auswerte-Einheit vorgesehen. Darüber hinaus umfasst der Montageadapter ein dämpfendes und/oder dichtendes Element, welches zwischen Rohrleitung und Adapterteil vorgesehen ist und somit das Adapterteil und die Rohrleitung entkoppelt bzw. beabstandet. Der Montageadapter bietet dem Fluidzähler eine definierte und belastbare Andockstelle und vereinfacht zudem den Montagevorgang erheblich. Ferner ist durch einen derartig ausgestalteten Montageadapter die Messstelle in der Rohrleitung festgelegt und nicht mehr verschiebbar, d. h. die Anordnung der Bauteilkomponenten des Fluidzählers kann vereinheitlicht werden, wie z. B. der Abstand zwischen den Ultraschallwandlern der ersten Messanordnung. Daraus resultiert der Vorteil, dass die Messstabilität sowie Messgenauigkeit in besonderem Maße verbessert werden. Ferner können die Bauteilkomponenten werkseitig als Einheit vorkonfektioniert werden. Dadurch wird die Montagedauer verringert. Zusätzlich kann durch Poka-Yoke Maßnahmen, wie z. B. durch Schlüssel-Schloss-Prinzip-Einstecklösungen, verhindert werden, dass der Montageadapter falsch installiert wird. Dadurch wird der Montagevorgang erheblich vereinfacht und die Betriebssicherheit erhöht. Zweckmäßigerweise kann das dämpfende und/oder dichtende Element ein Koppelmittel zum Koppeln der Ultraschallwandler, z. B. die Ultraschallwandler der ersten und/oder zweiten Messanordnung, an die Rohrleitung aufweisen. Der Eintrag der Ultraschallsignale in die Rohrleitung bzw. Rohrwandung wird dadurch verbessert.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine vereinfachte, schematische Schnittdarstellung einer ersten Ausgestaltung eines erfindungsgemäßen Fluidzählers;
- Fig. 2: eine vereinfachte, schematische Schnittdarstellung einer weiteren Ausgestaltung des erfindungsgemäßen Fluidzählers;
- Fig. 3: fünf vereinfachte, schematische Schnittdarstellungen der zweiten Messanordnung des Fluidzählers aus Fig. 2;
- Fig. 4: eine vereinfachte, schematische Darstellung des zeitlichen Verlaufs der Zunahme von Verschmutzungsgrad und Korrekturfaktor;
- Fig. 5: eine vereinfachte Darstellung des Verlaufs der Schallgeschwindigkeit in Abhängigkeit von der Temperatur eines Fluids;
- Fig. 6: eine vereinfachte, schematische Schnittdarstellung einer weiteren Ausgestaltung des erfindungsgemäßen Fluidzählers, sowie
- Fig. 7: eine vereinfachte, perspektivische Darstellung einer weiteren Ausgestaltung des erfindungsgemäßen Fluidzählers mit Montageadapter.

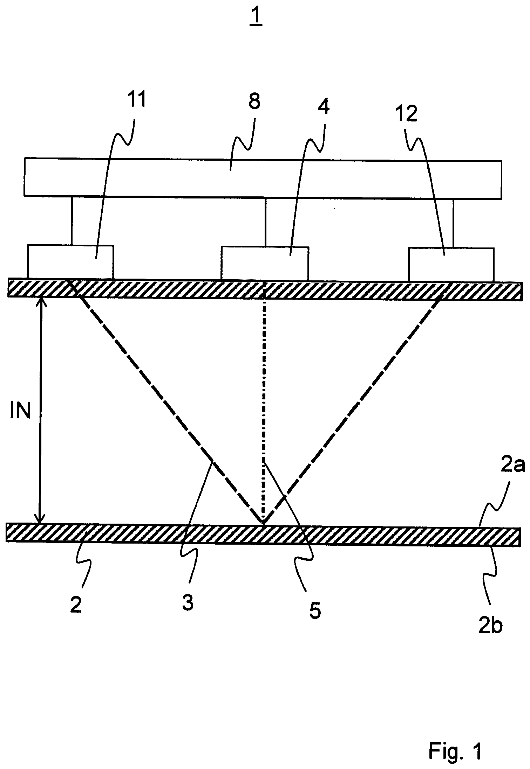

Bezugsziffer 1 in Fig. 1 bezeichnet einen erfindungsgemäßen Clamp-on-Fluidzähler kurz nach erfolgter Installation. Der Clamp-on-Fluidzähler 1 ist an einer mit Fluid durchströmten Rohrleitung 2 angeordnet, z. B. angeklemmt oder angeschraubt, d. h. keinerlei Messmittel des Clamp-on-Fluidzähler 1 stehen im Kontakt mit dem Fluid. Zur Durchflussmengenbestimmung des Fluids umfasst der Clamp-on-Fluidzähler 1 eine erste Messanordnung, die als Ultraschallmessanordnung mit zwei Ultraschallwandlern 11, 12 ausgebildet ist. Die Ultraschallwandler 11, 12 sind an der Rohrleitung 2 angebracht, wobei der Messschall durch die Rohrwandung 2a, 2b eingeleitet wird. Zwischen den beiden Ultraschallwandlern 11, 12 befindet sich eine V-förmige erste Messstrecke 3, die an der inneren Rohrwandung 2a der Rohrleitung 2 umgelenkt wird. Die Ultraschallwandler 11, 12 werden hierbei von einer übergeordneten Steuer- und Auswerteeinheit 8 gesteuert. Ferner umfasst der Clamp-on-Fluidzähler 1 eine zweite Messanordnung mit einem Ultraschallwandler 4 unter anderem zur Bestimmung des Innendurchmessers IN der Rohrleitung 2. Hierzu sendet der Ultraschallwandler 4 Ultraschallsignale entlang einer zweiten Messstrecke 5. Diese Ultraschallsignale werden an der Rohrleitung 2 in Richtung Ultraschallwandler 4 reflektiert und vom Ultraschallwandler 4 empfangen. Aus der Laufzeit dieses Ultraschallsignals lässt sich anschließend der Innendurchmesser IN der Rohrleitung 2 ermitteln.

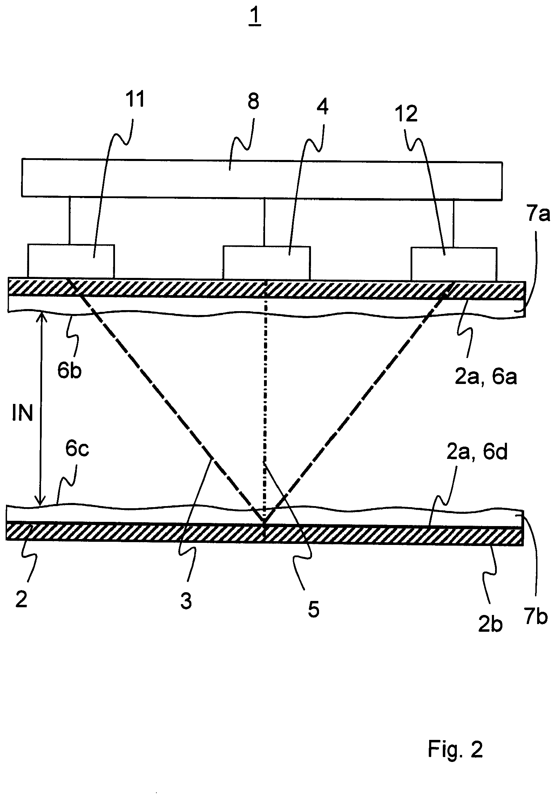

Fig. 2 zeigt einen im Betrieb befindlichen und bereits verschmutzten Clamp-on-Fluidzähler 1, der mit dem erfindungsgemäßen Verfahren betrieben wird. Der Clamp-on-Fluidzähler 1 umfasst eine erste Messanordnung zur Durchflussmengenbestimmung und eine zweite Messanordnung zur Bestimmung des Innendurchmessers IN der Rohrleitung 2 sowie zur Ermittlung der betriebsbedingten Änderungen des Strömungsquerschnitts.

Die Bestimmung des Innendurchmessers IN bzw. des Strömungsquerschnitts erfolgt anhand einer Impuls-Echo-Messung. Der Ultraschallwandler 4 wird hierzu mit einem scharfen Spannungspuls angeregt. Daraufhin sendet der Ultraschallwandler 4 ein Ultraschallsignal entlang der zweiten Messstrecke 5, welches an der Rohrwandung 2a reflektiert (Erzeugung eines Reflexionssignals) und anschließend wieder vom Ultraschallwandler 4 empfangen wird, d. h. das Empfangssignal bzw. das Echo. Zur Verarbeitung des Ultraschallsignals wird dieses zunächst z. B. mittels Hoch- und/oder Tiefpassfilter (nicht dargestellt) gefiltert. Anschließend wird das Signal aufgeteilt. Dies dient dazu, die Fehlerwahrscheinlichkeit zu reduzieren, indem die Samples des Signals bzw. Signalteile nicht betrachtet werden, die auf keinen Fall Informationen des Echos der Rohrwandung 2a beinhalten. Dadurch entsteht ein ausgeschnittenes Signal, in dem das Echo z. B. mittels eines vorbestimmten Schwellenwertes gesucht wird (Ermittlung eines Rückwandechos). Von diesem Echo werden sowohl der Beginn als auch die Frequenz bzw. Frequenzen ermittelt. Aus dem Beginn lässt sich die Laufzeit zwischen dem Ultraschallwandler 4 und der gegenüberliegenden inneren Rohrwandung 2a und/oder äußeren Rohrwandung 2b bestimmen. Aus den Frequenzen lässt sich wiederum die Laufzeit des Signals in der Rohrwand berechnen (Berechnung der Laufzeit aus der ermittelten Frequenz bzw. den ermittelten Frequenzen). Anhand dieser Werte lässt sich der Strömungsquerschnitt mathematisch bestimmen.

Ferner befinden sich Ablagerungen 7a, 7b an der inneren Rohrwandung 2a der Rohrleitung 2, die betriebsbedingt über einen bestimmten Nutzungszeitraum des Fluidzählers entstanden sind. Derartige Ablagerungen 7a, 7b können die Messgenauigkeit und Messstabilität negativ beeinflussen, indem beispielsweise der Strömungsquerschnitt verringert wird. Dadurch kann z. B. der aktuelle Strömungsquerschnitt über die Betriebszeit hinweg vom zum Installationszeitpunkt ermittelten Innendurchmesser IN der Rohrleitung 2 abweichen. Beispielsweise kann die erste Messstrecke 3 durch eine sich ausbreitende Ablagerungsschicht verkürzt und/oder verlagert werden.

Die Position und Schichtdicke der Ablagerungen 7a, 7b werden bei dem erfindungsgemäßen Verfahren anhand der Laufzeit des Ultraschallsignals entlang der zweiten Messstrecke 5 ermittelt, indem die Rohrleitung 2 über die zweite Messstrecke 5 mittels Impuls-Echo vermessen wird. Die Schichtübergänge zwischen den Ablagerungen 7a, 7b, der Fluidschicht sowie der Rohrwandung 2a stellen hierbei Grenzschichten dar, an denen das Ultraschallsignal des Ultraschallwandlers 4 reflektiert wird. Für die Bestimmung der Position sowie Schichtdicke der Ablagerungen 7a, 7b werden insbesondere die an der Grenzschicht 6a zwischen innerer Rohrwandung 2a und Ablagerung 7a, der Grenzschicht 6b zwischen Ablagerung 7a und Fluidschicht, der Grenzschicht 6c zwischen Fluidschicht und gegenüberliegender Ablagerung 7b sowie der Grenzschicht 6d zwischen gegenüberliegender Ablagerung 7b und gegenüberliegender innerer Rohrwandung 2a reflektierten Anteile des Ultraschallsignals herangezogen. Jedoch können auch Reflexionen an der äußeren Rohrwandung 2b sowie Materialübergängen innerhalb der Schichten erfolgen, deren jeweilige Position auch durch das Verfahren bestimmt werden kann.

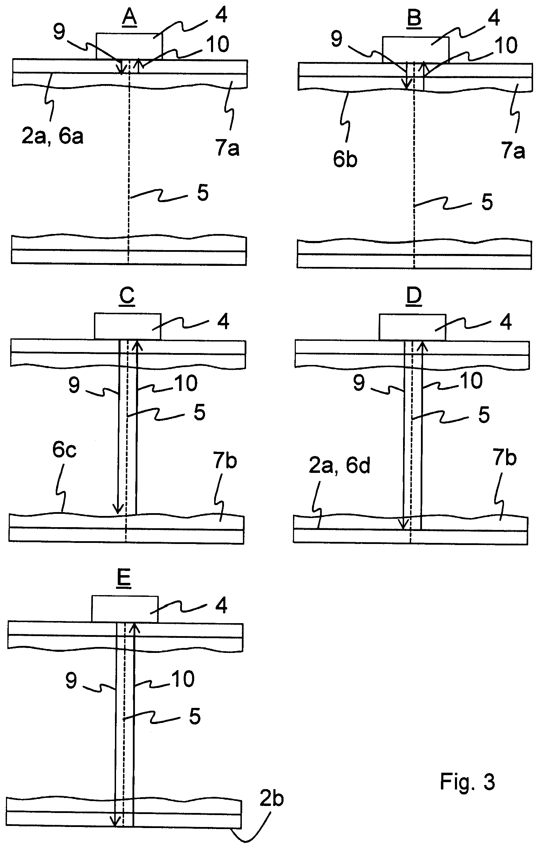

Gemäß Fig. 3 sendet der Ultraschallwandler 4 der zweiten Messanordnung zunächst ein Ultraschallsignal bzw. ein Sendesignal 9, welches orthogonal zur Durchströmungsrichtung des Fluids entlang der zweiten Messstrecke 5 läuft. Dieses Sendesignal 9 bzw. Teile des Sendesignals 9 wird bzw. werden, wie in den Darstellungen A-E in Fig. 3 gezeigt, an den Grenzschichten 6a, 6b, 6c, 6d reflektiert. Es kommt hierbei zu Reflexionen an der Grenzschicht 6a (Fig. 3, A), 6b (Fig. 3, B), 6c (Fig. 3, C), 6d (Fig. 3, D) sowie der äußeren Rohrwandung 2b (Fig. 3, E). Die Laufzeit des Ultraschallsignals bzw. des Sendesignals 9 und/oder des Empfangssignals 10 kann dabei zur Positionsbestimmung der jeweiligen Grenzschicht 6a, 6b, 6c, 6d herangezogen werden, sodass ein Profilschnitt der Rohrleitung 2 samt Ablagerungen 7a, 7b erstellt werden kann.

Ferner kann über die bekannte Schallgeschwindigkeit im Fluid, z. B. die Schallgeschwindigkeit im Wasser, und die Laufzeitdifferenz der Laufzeiten des Ultraschallsignals entlang der zweiten Messstrecke 5 zwischen dem Ultraschallwandler 4 und der Grenzschicht 6b und des Ultraschallsignals zwischen dem Ultraschallwandler 4 und der Grenzschicht 6c der jeweils aktuelle Strömungsquerschnitt ermittelt werden.

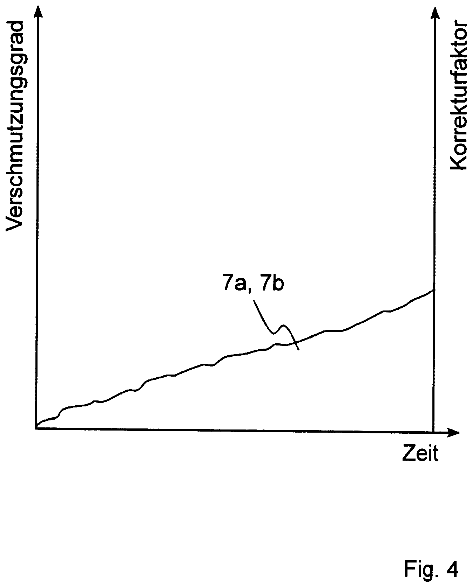

Eine vorbestimmte Schichtdicke der Ablagerungen 7a, 7b kann z. B. als Maß oder Grenzwert für einen bestimmten Verschmutzungsgrad herangezogen werden. Dadurch können Wartungsintervalle individuell an die jeweilige Verschmutzungssituation angepasst werden. Zudem erfolgt eine selbsttätige Korrektur bzw. Kalibration der ersten Messanordnung anhand der ermittelten Änderungen des Strömungsquerschnitts bzw. der durch die zweite Messanordnung erfassten Werte, indem z. B. die Einstellungen der Steuer- und Auswerteeirichtung 8 zur Steuerung der ersten Messanordnung, wie z. B. die Frequenz und/oder Intensität des Ultraschallsignals, an die jeweilige Messsituation bzw. dem aktuellen Strömungsquerschnitt angepasst werden. Dies kann z. B. über einen Korrekturfaktor erfolgen. In Fig. 4 ist der Anstieg des Korrekturfaktors in Abhängigkeit von der Zeit und des damit einhergehenden Anstiegs der Ablagerungen 7a, 7b bzw. der Ablagerungsdicke dargestellt.

Ferner können die Änderungen des Strömungsquerschnitts auch über einen längeren Zeitraum erfasst und in einer, in den Figuren nicht dargestellten, Speichereinrichtung gespeichert werden. Daraus resultiert der Vorteil, dass ein Verlauf aufgezeichnet werden kann, anhand dessen Ereignisse ermittelt werden können, die eine Verschmutzung hervorgerufen haben. Zudem können Wartungs- und Reinigungsintervalle an den tatsächlichen Bedarf angepasst werden. Die Haltbarkeit und Messstabilität des Clamp-on-Fluidzählers 1 wird dadurch zusätzlich verbessert. Zweckmäßigerweise können die über die Zeit gemessenen Strömungsquerschnitte in dem Speicher als Datenbank hinterlegt werden. Durch diese Datenbank können gemessene Werte verifiziert werden. Sollte nun eine sehr große Abweichung der Werte des Innendurchmessers IN festgestellt werden, kann das System derart konfiguriert sein, dass eine zweite unabhängige Messung durchgeführt wird. Durch diese Plausibilitätsprüfung können Messfehler minimiert werden.

Alternativ zu den Ausgestaltungen der Fig. 2 und 3 könnte auch ein zusätzlicher, in den Figuren nicht dargestellter, Ultraschallwandler der zweiten Messanordnung vorgesehen sein, der z. B. an der dem Ultraschallwandler 4 gegenüberliegenden Seite der Rohrleitung 2 angeordnet ist und ebenfalls entlang der zweiten Messstrecke 5 Ultraschallsignale senden und empfangen kann.

Darüber hinaus kann noch ein weiterer, in den Figuren nicht dargestellter, vorzugsweise entlang der Rohrleitung 2 um 90° zum Ultraschallwandler 4 der zweiten Messanordnung versetzt angeordneter Ultraschallwandler einer dritten Messanordnung vorgesehen sein. Dementsprechend könnte zwischen diesem Ultraschallwandler und der Rohrleitung 2 eine weitere, z. B. orthogonal zur zweiten Messstrecke 5 verlaufende, dritte Messstrecke angeordnet sein. Anhand der Messwerte der dritten Messanordnung kann z. B. eine Plausibilitätsprüfung der Messwerte der zweiten Messanordnung erfolgen. Zudem kann ermittelt werden, ob die Rohrleitung 2 radialsymmetrisch ist und ob es sich bei der Verschmutzung um eine entlang der inneren Rohrwandung 2a radialsymmetrisch d. h. gleichmäßig verlaufende oder eine ungleichmäßig verlaufende Verschmutzung handelt.

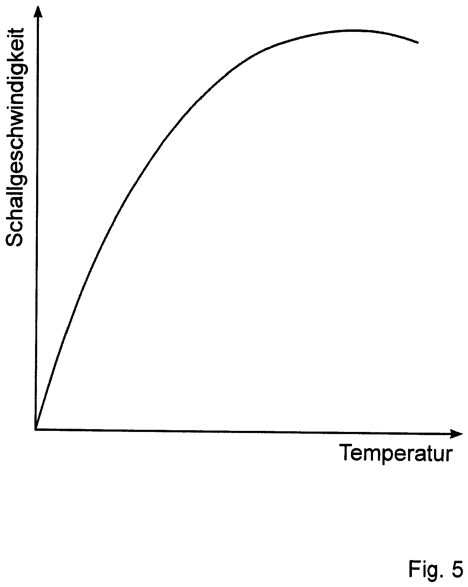

Ferner können auch andere Parameter, wie z. B. die Temperatur des Fluids, die Messgenauigkeit des Fluidzählers beeinflussen. Beispielsweise dadurch, dass die Schallgeschwindigkeit im Fluid bzw. im Wasser eine temperaturabhängige Größe ist. In Fig. 5 ist die Schallgeschwindigkeit in Wasser in Abhängigkeit von der Wassertemperatur dargestellt. Abweichungen der Fluidtemperatur haben demnach eine direkte Auswirkung auf die Schallgeschwindigkeit und damit auch auf die Messgenauigkeit des Fluidzählers bzw. der Durchflussmengenbestimmung. Die Schallgeschwindigkeit unterscheidet sich bei unterschiedlichen Temperaturen prozentual von einem Referenzwert. Beispielsweise kann als Referenzwert 20°C eingestellt werden. Die Schallgeschwindigkeit kann bereits bei 15°C um mehr als 1% abweichen. Um die Auswirkungen dieser Unsicherheiten der Schallgeschwindigkeit auf das Messergebnis zu minimieren, werden verschiedene Temperaturmodelle vorgestellt, die zur Korrektur der Durchflussmengen- und/oder Strömungsquerschnittbestimmung herangezogen werden können.

Eine Möglichkeit zur Temperaturmessung besteht darin, dass die Temperatur unter Verwendung der bereits vorhandenen Ultraschallwandler 11, 12 der ersten Messanordnung zur Bestimmung der Durchflussmenge des strömenden Fluids bestimmt werden. Hierbei wird z. B. bei der Installation, wenn noch kein Wasserfluss vorhanden ist, ein Impuls bzw. ein Ultraschallsignal ausgesendet, welches entlang der ersten Messstrecke 3 zwischen den Ultraschallwandlern 11, 12 läuft. Die Laufzeit dieses Ultraschallsignals wird ermittelt, wobei die Strecke, die das Signal zurücklegen muss, und die entsprechende Laufzeit bekannt sind, sodass direkt die Temperatur ermittelt werden kann. Beispielsweise kann das über eine in der Steuer- und Auswerteelektronik 8 hinterlegten Look up-Tabelle erfolgen. Anschließend werden im System die entsprechenden Daten hinterlegt. Bei der nächsten Temperaturmessung wird erneut die Laufzeit ermittelt. Durch Ablagerungen in der Rohrleitung kann beispielsweise die Laufzeit verringert werden. Anhand des initialen Wertes der Strecke und der neu ermittelten Laufzeit kann anschließend auf die Temperatur geschlossen werden.

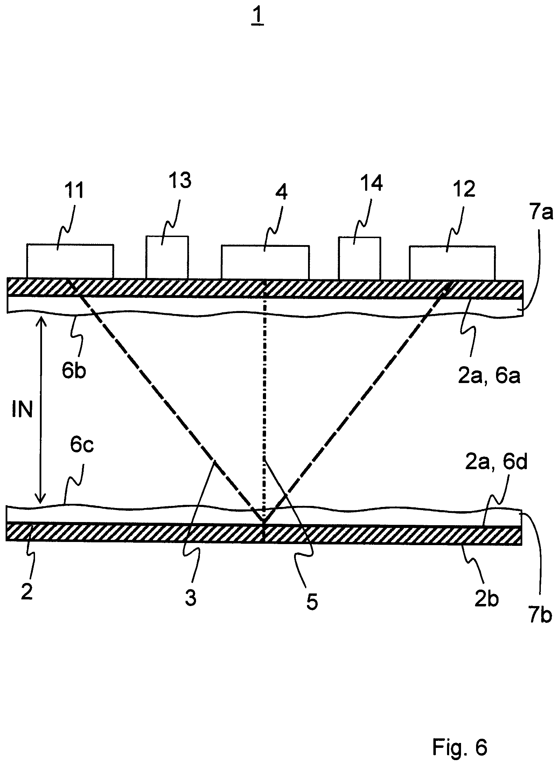

Alternativ oder zusätzlich können auch, wie in Fig. 6 gezeigt, zwei zusätzliche Temperatursensoren 13, 14 an der Rohrleitung 2 angeordnet sein, die dazu vorgesehen sind, die Temperatur der Umgebung sowie die Temperatur der Rohres bzw. der Rohrleitung 2 zu messen. Anschließend kann mittels eines thermodynamischen Models auf die Fluidtemperatur gerechnet werden, indem zunächst anhand der Rohrleitungstemperatur die Prandtl-Zahl bestimmt wird. Anhand der Prandtl-Zahl kann rechnerisch die Fluidtemperatur bestimmt werden. Um die Genauigkeit dieses Models zu erhöhen, kann z. B. eine Berechnungsschleife initialisiert werden, welche die Fluidtemperatur bestimmt und darauf aufbauend die Fluidtemperatur fortwährend erneut berechnet. Bei jeder Iteration der Berechnungsschleife wird nun überprüft, wie stark die ermittelte Temperatur von ihrem vorhergehenden Temperaturwert abweicht. Wird hierbei eine bestimmte, im Vorfeld festlegbare Grenze unterschritten, beginnt die Berechnungsschleife erneut.

Ergänzend können im Rahmen der Erfindung auch zusätzliche, in den Figuren nicht dargestellte, Mittel vorgesehen sein, wie z. B. Drucksensoren, die zur Druckbestimmung dienen, sodass eine Korrektur der Durchflussmengen- und/oder Strömungsquerschnittbestimmung und/oder der Kalibration des Fluidzählers und/oder der Verschmutzungsdetektion anhand des ermittelten Drucks erfolgen kann. Alternativ oder zusätzlich kann die Druckbestimmung auch anhand der ersten und/oder zweiten Messanordnung durchgeführt werden.

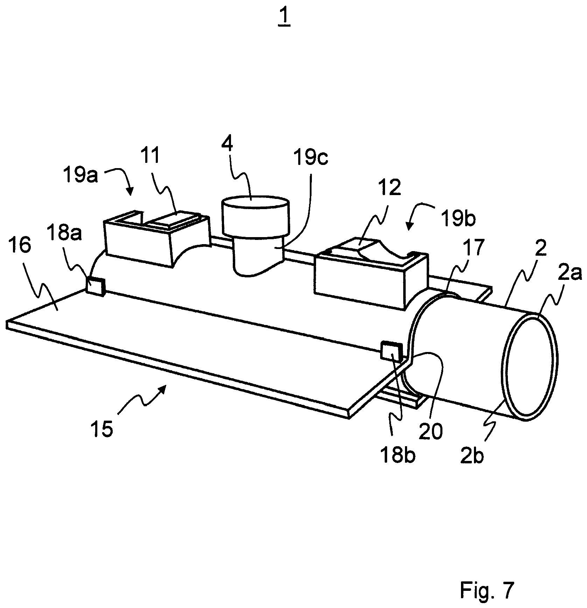

In Fig. 7 ist ein Montageadapter 15 für einen Clamp-on-Fluidzähler 1 dargestellt, mittels dem der Clamp-on-Fluidzähler 1 an eine Rohrleitung 2 montierbar ist. Der Montageadapter 15 umfasst ein im Wesentlichen plattenförmiges Adapterteil 16, das eine Rohrhalbschalengeometrie 17 aufweist, die vorzugsweise an die Kontur der Rohrleitung 2 angepasst ist. Die Rohrhalbschalengeometrie 17 kann auch derart ausgestaltet sein, dass diese an verschieden große Rohrleitungstypen anpassbar ist, z. B. können hierzu flexible oder verstellbare Elemente an der Unterseite vorgesehen sein. Beispielsweise kann ein derartiger Montageadapter 15 bei Rohrleitungen mit Nennweiten DN1 bis DN 10000, insbesondere DN 5 bis DN 6000, eigesetzt werden.

Ferner sind am Adapterteil 16 angebrachte Befestigungsmittel 18a, 18b zum Befestigen des Adapterteils 16 an der Rohrleitung 2 vorgesehen. Als Befestigungsmittel 18a, 18b können beispielsweise Zurrgurte, Klammern oder Spangen vorgesehen sein. Zudem sind oberseitig Aufnahmen 19a, 19b, 19c angeordnet, welche die erste und/oder zweite Messanordnung oder Teile davon aufnehmen. Die Steuer- und Auswerteeinheit 8, für welche ebenfalls eine nicht dargestellte Aufnahme vorgesehen sein kann, ist der Übersichtlichkeit halber in Fig. 7 nicht dargestellt. Zwischen der Rohrleitung 2 und dem Adapterteil 16 ist ein dämpfendes und/oder dichtendes Element 20 angeordnet, welches das Adapterteil 16 und die Rohrleitung 2 entkoppelt bzw. voneinander beabstandet. Das dämpfende und/oder dichtende Element 20 kann zudem ein, in Fig. 7 nicht dargestelltes, Koppelmittel umfassen, welches dazu vorgesehen ist, die Ultraschallwandler 4, 11, 12 an die Rohrleitung 2 zu koppeln, d. h. einen Kontakt zwischen Ultraschallwandler 4, 11, 12 und Rohrleitung 2 bzw. der äußeren Rohrwandung 2b herzustellen.

Zusammenfassend kann der Clamp-on-Fluidzähler 1 durch das Bestimmen der betriebsbedingten Änderungen des Strömungsquerschnitts vorzugsweise selbsttätig kalibriert werden, wobei die Rohrleitung 2, in welcher die Messung stattfindet, nicht mehr getauscht oder geöffnet werden muss. Trotzdem kann durch die Kalibrierung im Feld eine Eichung des Clamp-on-Fluidzählers 1 erzielt werden.

Ausdrücklich vom Offenbarungsgehalt umfasst sind auch Einzelmerkmalskombinationen (Unterkombinationen) sowie mögliche, nicht in den Zeichnungsfiguren dargestellte Kombinationen einzelner Merkmale unterschiedlicher Ausgestaltungsformen.

### BEZUGSZEICHEN LISTE

- 1: Clamp-on-Fluidzähler
- 2: Rohrleitung
- 2a: Rohrwandung (innere)
- 2b: Rohrwandung (äußere)
- 3: erste Messstrecke
- 4: Ultraschallwandler
- 5: zweite Messstrecke
- 6a-6d: Grenzschicht
- 7a: Ablagerungen
- 7b: Ablagerungen
- 8: Steuer- und Auswerte-Einheit
- 9: Sendesignal
- 10: Empfangssignal
- 11: Ultraschallwandler
- 12: Ultraschallwandler
- 13: Temperatursensor
- 14: Temperatursensor
- 15: Montageadapter
- 16: Adapterteil
- 17: Rohrhalbschalengeometrie
- 18a: Befestigungsmittel
- 18b: Befestigungsmittel
- 19a: Aufnahme
- 19b: Aufnahme
- 19c: Aufnahme
- 20: dämpfendes und/oder dichtendes Element

- IN: Innendurchmesser (der Rohrleitung)

## Patentansprüche

1. Verfahren zum Betrieb eines Fluidzählers, insbesondere eines Clamp-on-Fluidzählers (1), bei dem
eine erste Messanordnung an einer mit Fluid durchströmten Rohrleitung (2) angeordnet ist,
der ersten Messanordnung eine erste Messstrecke (3) zugeordnet ist, anhand der ersten Messanordnung eine Durchflussmengenbestimmung des Fluids durchgeführt wird, und
eine zweite Messanordnung vorhanden ist, die einen Ultra-schallwandler (4) umfasst, wobei
der Ultraschallwandler (4) ein Ultraschallsignal entlang einer zweiten Messstrecke (5) sendet, das vorzugsweise an der Rohrleitung (2) in Richtung Ultraschallwandler (4) reflektierbar ist,
die zweite Messstrecke (5) im Wesentlichen orthogonal zur Rohrleitung (2) und/oder Durchströmungsrichtung des Fluids angeordnet ist, und
die Laufzeit des Ultraschallsignals entlang der zweiten Messstrecke (5) bestimmt wird,
**dadurch gekennzeichnet, dass**
anhand der Laufzeit des Ultraschallsignals entlang der zweiten Messstrecke (5) betriebsbedingte Änderungen des Strömungsquerschnitts ermittelt werden,
eine Korrektur der Messwerte der ersten Messanordnung anhand der ermittelten betriebsbedingten Änderungen des Strömungsquerschnitts erfolgt, wobei der betriebsbedingt geänderte Strömungsquerschnitt der Rohrleitung (2) anhand der Schallgeschwindigkeit im Fluid und der Laufzeit des Ultraschallsignals entlang der zweiten Messstrecke (5) bestimmt wird,
eine Bestimmung der Temperatur des Fluids erfolgt, wobei die Temperatur des Fluids zur Korrektur der Schallgeschwindigkeit im Fluid und/oder der Durchflussmenge des Fluids herangezogen wird und
die Bestimmung der Temperatur des Fluids anhand der ersten Messanordnung erfolgt.

2. Verfahren nach Anspruch 1, **dadurch gekennzeichnet, dass** zur Ermittlung der betriebsbedingten Änderungen des Strömungsquerschnitts ein Empfangssignal verwendet wird, welches sich zusammensetzt aus Reflexionsanteilen des Sendesignals in Bezug auf eine Reflexion des Sendesignals an
- der Grenzschicht (6a) zwischen innerer Rohrwandung (2a) und Ablagerung (7a) und/oder
- der Grenzschicht (6b) zwischen Ablagerung (7a) und Fluidschicht und/oder
- der Grenzschicht (6c) zwischen Fluidschicht und gegenüberliegender Ablagerung (7b) und/oder
- der Grenzschicht (6d) zwischen gegenüberliegender Ablagerung (7b) und gegenüberliegender innerer Rohrwandung (2a) und/oder
- der äußeren Rohrwandung (2b).

3. Verfahren nach mindestens einem der vorhergehenden Ansprüche, **dadurch gekennzeichnet, dass** die Änderungen des Strömungsquerschnitts in Abhängigkeit von der Zeit erfasst werden.

4. Verfahren nach mindestens einem der vorhergehenden Ansprüche, **dadurch gekennzeichnet, dass** die Temperatur des Fluids dadurch bestimmt wird, dass die gemessene Laufzeit mit einer empirisch ermittelten Tabelle verglichen wird, die die Laufzeit in Abhängigkeit der Temperatur des Fluids beinhaltet.

5. Verfahren nach Anspruch 4, **dadurch gekennzeichnet, dass** die Temperatur der Rohrleitung (2) und/oder die Umgebungstemperatur bestimmt und zur Bestimmung der Temperatur des Fluids herangezogen werden.

6. Verfahren nach Anspruch 5, **dadurch gekennzeichnet, dass** mittels Temperatursensoren (13, 14) die Temperatur der Rohrleitung (2) und/oder die Umgebungstemperatur gemessen wird bzw. werden und darus die Temperatur des Fluids berechnet wird.

7. Verfahren nach einem der vorhergehenden Ansprüche, **dadurch gekennzeichnet, dass** als erste Messanordnung eine Ultraschallmessanordnung mit mindestens einem Ultraschallwandler (11, 12) zum Senden und/oder Empfangen von Ultraschallsignalen entlang der ersten Messstrecke (3) vorhanden ist und die Durchflussmengenbestimmung des Fluids anhand einer Laufzeitmessung der Ultraschallsignale der Ultraschallmessanordnung durchgeführt wird.

8. Verfahren nach einem der vorhergehenden Ansprüche, **dadurch gekennzeichnet, dass** eine, vorzugsweise vom Fluidzähler selbsttätig vorzunehmende, Kalibrierfunktion zur Kalibration der ersten Messanordnung vorhanden ist und die Kalibration anhand der ermittelten Werte der zweiten Messanordnung erfolgt.

9. Verfahren nach einem der vorhergehenden Ansprüche, **dadurch gekennzeichnet, dass** eine Verschmutzungsgradbestimmung vorhanden ist, wobei der Grad der Verschmutzung anhand des betriebsbedingt geänderten Strömungsquerschnitts der Rohrleitung (2) und/oder der Position der Grenzschicht (6a, 6b, 6c, 6d) bestimmt wird.

10. Verfahren nach einem der vorhergehenden Ansprüche, **dadurch gekennzeichnet, dass** die Frequenz des an der Rohrwandung (2a bzw. 2b) reflektierten Ultraschallsignals der zweiten Messanordnung bestimmt wird und anhand dieser Frequenz die Laufzeit des Ultraschallsignals in der Wandung der Rohrleitung (2) bestimmt wird.

11. Verfahren nach einem der vorhergehenden Ansprüche, **dadurch gekennzeichnet, dass** das Verfahren ferner mindestens einen der folgenden Verfahrensschritte umfasst:
- Erzeugung eines Reflexionssignals,
- Ermittlung eines Rückwandechos,
- Ermittlung des Beginns des Rückwandechos,
- Ermittlung der im Rückwandecho enthaltenen Frequenzen,
- Berechnung der Laufzeit aus den ermittelten Frequenzen.

12. Verfahren nach einem der vorhergehenden Ansprüche, **dadurch gekennzeichnet, dass** eine dritte Messanordnung mit mindestens einem Ultraschallwandler vorhanden ist, wobei der raschallwandler ein Ultraschallsignal entlang einer dritten Messstrecke sendet und anhand der Laufzeit des Ultraschallsignals entlang der dritten Messstrecke betriebsbedingte Änderungen des Strömungsquerschnitts ermittelt werden.

13. Verfahren nach einem der vorhergehenden Ansprüche, **dadurch gekennzeichnet, dass** anhand der Messwerte der dritten Messanordnung eine Überprüfung und/oder Änderung der Messwerte der ersten und/oder zweiten Messanordnung erfolgt.

14. Fluidzähler, insbesondere Clamp-on-Fluidzähler (1), zur Bestimmung der Durchflussmenge innerhalb einer Rohrleitung (2), umfassend
eine erste Messanordnung mit einer ersten Messstrecke (3) zur Durchflussmengenbestimmung,
eine zweite Messanordnung mit einem Ultraschallwandler (4), der dazu hergerichtet ist, ein Ultraschallsignal entlang einer zweiten Messstrecke (5) zu senden und/oder zu empfangen, wobei die zweite Messstrecke (5) im Wesentlichen orthogonal zur Rohrleitung (2) und/oder Durchströmungsrichtung des Fluids angeordnet ist, und
eine Steuer- und Auswerte-Einheit (8), mittels der die Laufzeit des Ultraschallsignals entlang der ersten (3) und/oder zweiten Messstrecke (5) bestimmbar ist,
**dadurch gekennzeichnet, dass**
der Fluidzähler so eingerichtet ist, dass er mit einem Verfahren nach einem der vorhergehenden Ansprüche betrieben wird.

15. Fluidzähler nach Anspruch 14, **dadurch gekennzeichnet, dass** Temperatursensoren (13, 14) zur Messung der Temperatur der Rohrleitung (2) sowie der Umgebungstemperatur vorhanden sind und/oder ein Montageadapter (15) vorhanden ist, der die Bauteilkomponenten des Fluidzählers, insbesondere die erste Messanordnung, die zweite Messanordnung und/oder die Steuer- und Auswerte-Einheit (8), aufnimmt und mittels welchem der Fluidzähler an die Rohrleitung (2) montierbar ist.

## Claims

1. Method for operating a fluid meter, in particular a clamp-on fluid meter (1), in which
a first measuring arrangement is arranged on a pipeline (2) through which fluid flows,
the first measuring arrangement is assigned a first measurement path (3), a determination of the amount of fluid flowing through is carried out on the basis of the first measuring arrangement, and
there is a second measuring arrangement, which comprises an ultrasonic transducer (4), wherein
the ultrasonic transducer (4) transmits an ultrasonic signal along a second measurement path (5), which preferably can be reflected at the pipeline (2) in the direction of the ultrasonic transducer (4),
the second measurement path (5) is arranged substantially orthogonal to the pipeline (2) and/or the direction in which the fluid flows through, and the transit time of the ultrasonic signal along the second measurement path (5) is determined,
**characterized in that**
operationally dependent changes of the flow cross section are ascertained on the basis of the transit time of the ultrasonic signal along the second measurement path (5),
a correction of the measured values of the first measuring arrangement is performed on the basis of the ascertained operationally dependent changes of the flow cross section, wherein the operationally dependent changed flow cross section of the pipeline (2) is determined on the basis of the speed of sound in the fluid and the transit time of the ultrasonic signal along the second measurement path (5),
a determination of the temperature of the fluid is performed, wherein the temperature of the fluid is used for correcting the speed of sound in the fluid and/or the amount of fluid flowing through and
the determination of the temperature of the fluid is performed on the basis of the first measuring arrangement.

2. Method according to Claim 1, **characterized in that** the operationally dependent changes of the flow cross section are ascertained by using a reception signal, which is made up of reflection components of the transmission signal with respect to a reflection of the transmission signal at
- the interface (6a) between an inner pipe wall (2a) and a deposit (7a) and/or
- the interface (6b) between the deposit (7a) and a fluid layer and/or
- the interface (6c) between the fluid layer and an opposite deposit (7b) and/or
- the interface (6d) between the opposite deposit (7b) and an opposite inner pipe wall (2a) and/or the outer pipe wall (2b).

3. Method according to at least one of the preceding claims, **characterized in that** the changes of the flow cross section are recorded on a time-dependent basis.

4. Method according to at least one of the preceding claims, **characterized in that** the temperature of the fluid is determined by the measured transit time being compared with an empirically ascertained table, which contains the transit time in dependence on the temperature of the fluid.

5. Method according to Claim 4, **characterized in that** the temperature of the pipeline (2) and/or the ambient temperature are determined and used for determining the temperature of the fluid.

6. Method according to Claim 5, **characterized in that** the temperature of the pipeline (2) and/or the ambient temperature is or are measured by means of temperature sensors (13, 14) and the temperature of the fluid is calculated from this.

7. Method according to one of the preceding claims, **characterized in that** there is as the first measuring arrangement an ultrasonic measuring arrangement with at least one ultrasonic transducer (11, 12) for transmitting and/or receiving ultrasonic signals along the first measurement path (3), and the determination of the amount of fluid flowing through is carried out on the basis of a transit-time measurement of the ultrasonic signals of the ultrasonic measuring arrangement.

8. Method according to one of the preceding claims, **characterized in that** there is a calibrating function for the calibration of the first measuring arrangement, preferably to be performed independently of the fluid meter, and the calibration is performed on the basis of the ascertained values of the second measuring arrangement.

9. Method according to one of the preceding claims, **characterized in that** there is a determination of the degree of contamination, wherein the degree of contamination is determined on the basis of the operationally dependently changed flow cross section of the pipeline (2) and/or the position of the interface (6a, 6b, 6c, 6d).

10. Method according to one of the preceding claims, **characterized in that** the frequency of the ultrasonic signal of the second measuring arrangement that is reflected at the pipe wall (2a or 2b) is determined and the transit time of the ultrasonic signal in the wall of the pipeline (2) is determined on the basis of this frequency.

11. Method according to one of the preceding claims, **characterized in that** the method also comprises at least one of the following method steps:
- generating a reflection signal,
- ascertaining a backwall echo,
- ascertaining the beginning of the backwall echo,
- ascertaining the frequencies contained in the backwall echo,
- calculating the transit time from the frequencies ascertained.

12. Method according to one of the preceding claims, **characterized in that** there is a third measuring arrangement with at least one ultrasonic transducer, wherein the ultrasonic transducer transmits an ultrasonic signal along a third measurement path and operationally dependent changes of the flow cross section are ascertained on the basis of the transit time of the ultrasonic signal along the third measurement path.

13. Method according to one of the preceding claims, **characterized in that** a checking and/or changing of the measured values of the first and/or second measuring arrangement is performed on the basis of the measured values of the third measuring arrangement.

14. Fluid meter, in particular a clamp-on fluid meter (1), for determining the amount flowing through within a pipeline (2), comprising
a first measuring arrangement with a first measurement path (3) for determining the amount flowing through,
a second measuring arrangement with an ultrasonic transducer (4), which is set up for transmitting and/or receiving an ultrasonic signal along a second measurement path (5), wherein
the second measurement path (5) is arranged substantially orthogonal to the pipeline (2) and/or the direction in which the fluid flows through, and a control and evaluation unit (8), by means of which the transit time of the ultrasonic signal along the first measurement path (3) and/or second measurement path (5) can be determined,
**characterized in that**
the fluid meter is set up such that it is operated by a method according to one of the preceding claims.

15. Fluid meter according to Claim 14, **characterized in that** there are temperature sensors (13, 14) for measuring the temperature of the pipeline (2) and also the ambient temperature
and/or there is a mounting adapter (15), which receives the component parts of the fluid meter, in particular the first measuring arrangement, the second measuring arrangement and/or the control and evaluation unit (8), and by means of which the fluid meter can be mounted on the pipeline (2).

## Revendications

1. Procédé de fonctionnement d'un compteur de fluide, en particulier d'un compteur de fluide serre-tube (1), dans lequel
un premier dispositif de mesure est disposé sur une conduite (2) traversée par le fluide,
une première section de mesure (3) est associée au premier dispositif de mesure, une détermination du débit du fluide est effectuée à l'aide du premier dispositif de mesure, et
il est prévu un deuxième dispositif de mesure comprenant un transducteur à ultrasons (4), dans lequel le transducteur à ultrasons (4) émet un signal ultrasonore le long d'une deuxième section de mesure (5), lequel signal ultrasonore peut de préférence être réfléchi sur la canalisation (2) en direction du transducteur à ultrasons (4),
la deuxième section de mesure (5) est disposée de manière sensiblement orthogonale à la conduite (2) et/ou à la direction d'écoulement du fluide, et
le temps de transit du signal ultrasonore le long de la deuxième section de mesure (5) est déterminé,
**caractérisé en ce que** des modifications de la section d'écoulement induites par le fonctionnement sont déterminées sur la base du temps de transit du signal ultrasonore le long de la deuxième section de mesure (5), une correction des valeurs de mesure du premier dispositif de mesure est effectuée sur la base des modifications de la section d'écoulement induites par le fonctionnement et ayant été déterminées, dans lequel la section d'écoulement modifiée par le fonctionnement de la conduite (2) est déterminée sur la base de la vitesse du son dans le fluide et du temps de transit du signal ultrasonore le long de la deuxième section de mesure (5), une détermination de la température du fluide est effectuée, dans lequel la température du fluide est utilisée pour corriger la vitesse du son dans le fluide et/ou le débit du fluide, et la détermination de la température du fluide est effectuée à l'aide du premier dispositif de mesure.

2. Procédé selon la revendication 1, **caractérisé en ce que** pour déterminer les modifications induites par le fonctionnement de la section d'écoulement, on utilise un signal reçu qui est composé de composantes de réflexion du signal émis par rapport à une réflexion du signal émis sur
- la couche limite (6a) entre la paroi intérieure de la conduite (2a) et le dépôt (7a) et/ou
- la couche limite (6b) entre le dépôt (7a) et la couche de fluide et/ou
- la couche limite (6c) entre la couche de fluide et le dépôt opposé (7b) et/ou
- la couche limite (6d) entre le dépôt opposé (7b) et la paroi intérieure opposée de la conduite (2a) et/ou
- la paroi extérieure de la conduite (2b).

3. Procédé selon au moins l'une des revendications précédentes, **caractérisé en ce que** les variations de la section d'écoulement en fonction du temps sont détectées.

4. Procédé selon au moins l'une des revendications précédentes, **caractérisé en ce que** la température du fluide est déterminée en comparant le temps de transit mesuré à une table déterminée empiriquement qui contient le temps de transit en fonction de la température du fluide.

5. Procédé selon la revendication 4, **caractérisé en ce que** la température de la conduite (2) et/ou la température ambiante sont déterminées et utilisées pour déterminer la température du fluide.

6. Procédé selon la revendication 5, **caractérisé en ce que** la température de la conduite (2) et/ou la température ambiante est/sont mesurée(s) au moyen de capteurs de température (13, 14) et est/sont utilisée(s) pour calculer la température du fluide.

7. Procédé selon l'une des revendications précédentes, **caractérisé en ce qu'**il est prévu en tant que premier dispositif de mesure un dispositif de mesure à ultrasons comprenant au moins un transducteur à ultrasons (11, 12) pour l'émission et/ou la réception de signaux ultrasonores le long de la première section de mesure (3) et la détermination du débit du fluide est effectuée sur la base d'une mesure du temps de transit des signaux ultrasonores du dispositif de mesure à ultrasons.

8. Procédé selon l'une des revendications précédentes, **caractérisé en ce qu'**il est prévu une fonction d'étalonnage, qui doit de préférence être exécutée automatiquement par le compteur de fluide, pour étalonner le premier dispositif de mesure, et **en ce que** l'étalonnage est effectué sur la base des valeurs déterminées du deuxième dispositif de mesure.

9. Procédé selon l'une des revendications précédentes, **caractérisé en ce qu'**il est prévu une détermination du degré de contamination, dans lequel le degré de contamination est déterminé sur la base de la section d'écoulement de la conduite (2) modifiée par le fonctionnement et/ou de la position de la couche limite (6a, 6b, 6c, 6d).

10. Procédé selon l'une des revendications précédentes, **caractérisé en ce que** la fréquence du signal ultrasonore du deuxième dispositif de mesure, réfléchi sur la paroi de la conduite (2a ou 2b), est déterminée et **en ce que** le temps de transit du signal ultrasonore dans la paroi de la conduite (2) est déterminé sur la base de ladite fréquence.

11. Procédé selon l'une des revendications précédentes, **caractérisé en ce que** le procédé comprend en outre au moins l'une des étapes de procédé suivantes :
- génération d'un signal de réflexion,
- détermination d'un écho de paroi arrière,
- détermination du début de l'écho de paroi arrière,
- détermination des fréquences contenues dans l'écho de paroi arrière,
- calcul du temps de transit à partir des fréquences déterminées.

12. Procédé selon l'une des revendications précédentes, **caractérisé en ce qu'**il est prévu un troisième dispositif de mesure comprenant au moins un transducteur à ultrasons, dans lequel le transducteur à ultrasons émet un signal ultrasonore le long d'une troisième section de mesure et des modifications de la section d'écoulement induites par le fonctionnement sont déterminées sur la base du temps de transit du signal ultrasonore le long de la troisième section de mesure.

13. Procédé selon l'une des revendications précédentes, **caractérisé en ce qu'**une vérification et/ou une modification des valeurs de mesure du premier et/ou du deuxième dispositif de mesure est effectuée sur la base des valeurs de mesure du troisième dispositif de mesure.

14. Compteur de fluide, en particulier compteur de fluide serre-tube (1), pour déterminer le débit dans une conduite (2), comportant
un premier dispositif de mesure comportant une première section de mesure (3) pour déterminer le débit,
un deuxième dispositif de mesure comprenant un transducteur à ultrasons (4) conçu pour émettre et/ou recevoir un signal ultrasonore le long d'une deuxième section de mesure (5), dans lequel
la deuxième section de mesure (5) est disposée de manière sensiblement orthogonale à la conduite (2) et/ou à la direction d'écoulement du fluide, et
une unité de commande et d'évaluation (8) au moyen de laquelle le temps de transit du signal ultrasonore le long de la première (3) et/ou de la deuxième section de mesure (5) peut être déterminé,
**caractérisé en ce que**
le compteur de fluide est conçu pour être exploité conformément à un procédé selon l'une des revendications précédentes.

15. Compteur de fluide selon la revendication 14, **caractérisé en ce qu'**il est prévu des capteurs de température (13, 14) pour mesurer la température de la conduite (2) et la température ambiante et/ou un adaptateur de montage (15) qui reçoit les éléments constitutifs du compteur de fluide, en particulier le premier dispositif de mesure, le deuxième dispositif de mesure et/ou l'unité de commande et d'évaluation (8), et au moyen duquel le compteur de fluide peut être monté sur la conduite (2).
